Europäisches Patentamt

European Patent Office

Office européen des brevets

(19)

(11) Publication number: **0 021 360**
A2

(12) **EUROPEAN PATENT APPLICATION**

(21) Application number: **80103444.8**

(22) Date of filing: **20.06.80**

(51) Int. Cl.³: **B 62 B 3/06**

(30) Priority: **26.06.79 IT 4007979**

(71) Applicant: **Ansaloni, Franco, Via Lorenzini, 43, I-41100 Modena (IT)**
Applicant: **Benedetti, Giuseppe, Via Zattera, 31, F-41100 Modena (IT)**

(43) Date of publication of application: **07.01.81**
**Bulletin 81/1**

(72) Inventor: **Ansaloni, Franco, Via Lorenzini, 43, I-41100 Modena (IT)**
Inventor: **Benedetti, Giuseppe, Via Zattera, 31, F-41100 Modena (IT)**

(84) Designated Contracting States: **DE FR GB**

(74) Representative: **Modiano, Guido et al, MODIANO & ASSOCIATI S.A.S. Via Meravigli, 16, I-20123 Milan (IT)**

(54) **Hand operated truck, particularly for central heating system radiators.**

(57) In order to remove the difficulties in the transportation of big radiators of centralized heating systems in particular during the loading and unloading stage there is provided a hand operated truck comprising a wheeled frame (1, 2, 3), a platform member (8) supported on the frame (1, 2, 3) and towing handle means (11) associated to the frame. Kinematic supporting means (9, 10, 11) are provided for the platform member (8) allowing composite movement thereof at least in a vertical and a horizontal direction. Jack or hoist means (4, 5) arranged on said frame impart the composite movement to the platform member (8).

This invention relates to hand operated trucks, particularly for central heating system radiators.

The heretofore existing hand operated trucks of the mentioned kind did not solve the problem of loading and unloading and transportation of heavy and cumbersome central heating system radiator units and did not adequatly solve the problem of transportation of such units through relatively narrow door openings especially when very long radiator units have to be transported.

Special difficulties were encountered when the platform or fork member of the truck had to be pushed below the radiator unit, which normaly is devoid of legs and lies with its entire bottom flat on the floor. Moreover the pushing movement is normally carried out by moving the entire truck in the pushing direction, the platform or fork member being prevented from relative horizontal movements. Such circumstances implied that the fork or platform members were arranged at the front of the truck and reached out in the normally forward direction of advancement of the truck, and as a consequence when the radiator was finally loaded on the platform member its longest dimension was positioned transverse to the longitudinal direction of the truck so that, in order to pass through narrow door openings it was necessary to rotate the radiator unit or the truck together with the radiator unit.

An object of the invention is to solve the above problems and in general to improve the operability of hand operated trucks of the mentioned kind.

These and other objects, which will appear more fully from the description which follows are attained according to the invention by a hand operated truck particularly for loading, transporting and unloading heating system radiators, including a wheeled frame, at least one platform member supported on said frame and towing handle means associated to said frame, characterized in that it comprises kinematic supporting means for said platform member allowing composite movement thereof at least in a vertical and a horizontal direction and jack or hoist means on said frame for imparting said composite movement to said platform member.

It will be understood that the term "platform member" as used herein throughout the specification and claims should be intended totaly equivalent to the term "fork member".

According to one embodiment of the present invention the truck comprises in essence a horizontal frame supported by four small wheels. That frame forms, as mentioned, a base or deck whereto a vertical hydraulic cylinder is attached. The top end of the piston rod is thus allowed to move vertically up and down with respect to the ground floor whereon the truck is resting. Laterally to the truck frame, there is attached, by hinged connection, a sufficiently strong platform or fork member which protrudes laterally cantilever-fashion and can be inserted under a vertically standing radiator arranged to lean slightly (e.g.

leaning against a wall), to load and lift it. Said platform is in fact equipped with a handle, and by manual operation of that handle, it can be handled by pivoting it about its base hinge. Once the platform has been inserted under the radiator, it can be pivoted through the handle such that the top handgrip of the handle can be hooked to the top end of the plunger in the down position of the hydraulic cylinder. At this point, in order to lift the radiator, it will be sufficient to operate the hand lever of the hydraulic cylinder pump. The radiator will move gradually up from a relatively leaning vertical position to a position which tends to grow increasingly vertical. For lowering the radiator, the above operations are performed in the reverse order.

The details of this invention will be described with reference to the accompanying drawing which shows, in a merely schematical way, an embodiment of the invention, given herein by way of example and not of limitation, and where:

Figure 1 shows the truck with the platform member lowered to the ground, the truck being viewed from the opposite side with respect to the platform member;

Figure 2 shows the truck as viewed from the platform member side, with the platform in the raised position;

Figure 3 is a front view of the truck in the position also shown in Figure 1, namely with the truck lowered to the ground floor;

Figure 4 is a front view of the truck in the same position as the side view of Figure 2.

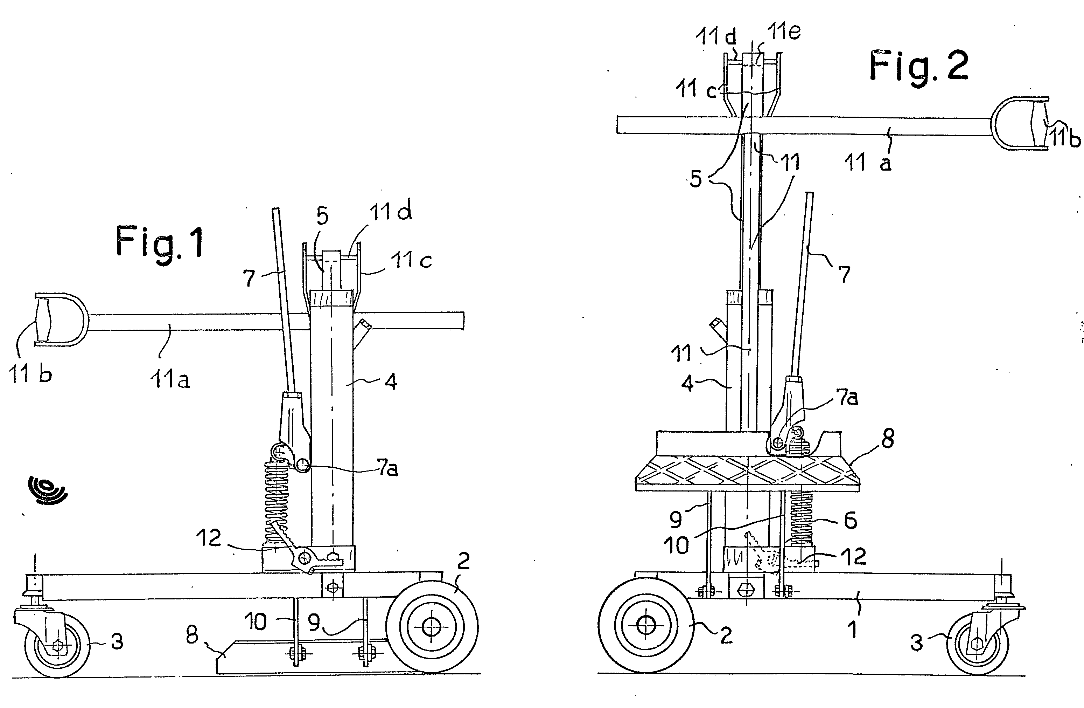

With reference to the accompanying drawing, and in particular to Figure 2, the numeral 1 designates the truck frame, forming in practice a horizontal deck or base equipped with two front wheels 2 and two rear caster wheels 3. The numeral 4 designates the hydraulic cylinder, secured vertically to the frame 1 such that its piston rod 5 is enabled to slide vertically. The numeral 6 designates the small pump for actuating the hydraulic cylinder 4. The numeral 7 designates the hand lever which pivots about the pin 7a supported on the cylinder 4 and has the function of actuating the small pump 6. The numeral 8 designates the platform which protrudes laterally cantilever-fashion. The lower portion of the platform is hinged, by means of the two parallel crank levers 9 and 10, to the underlying side of the truck frame (Fig. 2). The numeral 11 designates the platform handle, which handle is provided at the top with the horizontal rod 11a rigid therewith. The rod 11a is provided at one end with the handgrip 11b. The handle 11 is also provided at the top with a sort of yoke or fork 11c having a cross pin 11d. In the Figures of the accompanying drawing, the cross pin 11d of said yoke is inserted and caused to rest in a notch or cutout 11e formed in the top end of the rod 5. The numeral 12 designates the pedal-operated valve for reversing the stroke of the rod 5. In fact, it allows in one position the pump 6 to move the piston rod 5 up, when the pump is actuated and in the reverse position, it causes the piston rod 5 and accordingly the yoke 11c, handle 11 and shovel 8, to automatically sink.

The operation of the device is as follows:

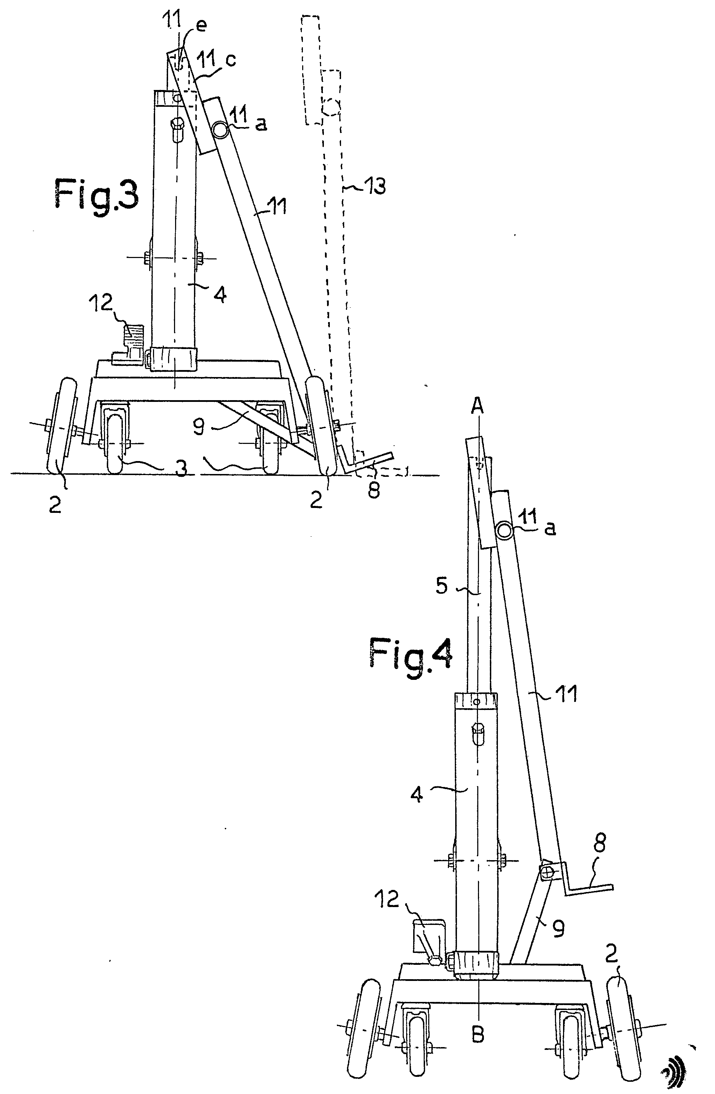

With reference to Figure 3, there is shown at 13 in dotted lines the rotated position of the platform and related handle, in which the platform is horizontal and the handle vertical and which position is achieved, with the piston rod 5 being lowered, by manually straightening up the handle 11, after withdrawing the cross pin 11d from the notch 11e by either lowering the piston rod 5 below a preestablished level or by lifting the handle 13 with respect to the piston rod 5 beyond a preestablished level. That position is used, by operation of the handle 11, to insert the platform under the radiator, which must be prearranged for this purpose to rest onto the ground in a slightly leaning vertical position, either on account of its having been previously leaned against a wall, or by manual handling. At this point, the radiator is manually straightened up, such as to rest fully onto the platform 8 which, as mentioned, forms a bracket of sort. Then it will be easy to pivot the handle 11 in order to bring the pin 11d exactly above the notch 11e of the piston rod 5 while the latter is in its lowermost position, and by raising the piston rod 5, to insert the cross pin 11d of the yoke 11c into the notch 11e. By further operating the lever 7 the pump 6 is actuated and the platform 8 is caused to move from the position shown in Figure 3 to that shown in Figure 4. From the latter Figure, the function of the crank levers 9 and 10 will be more clearly appreciated. In fact, as the piston rod 5 moves up, the radiator resting on the platform 8 and rod 11$\underline{a}$ is moved closer, with its base, to the axis A-B of the hydraulic cylinder. This allows a reduction of the side clearance requirements, that is it allows the radiator to be brought to an inboard position with respect to the side wheel 2 underlying it. At this point, the operator is enabled to manoeuver the truck at will through the handgrip 11$\underline{b}$, either pushing or pulling or turning it over the ground floor, as necessary. Upon reaching the destination point, the operator will place the truck in a position such that the radiator can be deposited on the ground floor in the required position. At this point, he will just operate with one foot the pedal 12 to cause the platform and radiator to move down automatically. Upon the platform contacting the ground floor, by further lowering the piston rod 5 the cross pin 11$\underline{d}$ will slip out from the notch 11$\underline{e}$ and the operator will grasp the rod 11$\underline{a}$ or yoke 11$\underline{b}$, pivot the handle 11, and lay the radiator down against a wall. Thereafter, he will pull the truck away and get ready for transporting another radiator.

It will be understood that the invention is not limited to the one embodiment described hereinabove, and that variations and improvements may be introduced therein without departing from the scope of the invention, as defined in the appended claims. Thus for example, instead of a manually operated pump, another source of hydraulic pressure may be used.

## C L A I M S

1. Hand operated truck particularly for loading, transporting and unloading heating system radiators, including a wheeled frame (1,2,3), at least one platform member (8) supported on said frame (1,2,3) and towing handle means (11) associated to said frame (1,3), characterized in that it comprises kinematic supporting means (9,10,11) for said platform member (8) allowing composite movement thereof at least in a vertical and a horizontal direction and jack or hoist means (4,5) on said frame for imparting said composite movement to said platform member (8).

2. A truck according to Claim 1, characterized in that said platform member (8) reaches out laterally with respect to the longitudinal direction of normal advancement of the truck and said horizontal component of the composite movement is in the same lateral direction.

3. A truck according to Claims 1 and 2, characterized in that said kinematic supporting means (9,10,11) allow in addition an angular movement of said platform member (8) at least about one horizontal axis extending in the longitudinal direction of the truck.

4. A truck according to Claims 1-3, characterized in that said kinematic supporting means (9,10,11) comprise an articulated lever system.

5. A truck according to Claims 1-4, characterized in that said jack means is a manual pump operated hydraulic jack having its cylinder (4) fixed in erected position on said frame (1,2,3) and its piston rod (5) projecting upwardly therefrom and wherein said articulated lever system comprises a crank lever like member (9,10) linked with one end thereof on said frame (1) and articulated with the other end thereof on a lug member rigid with said platform member (8) and a rod member (11) rigid with said platform member (8), extending transverse to the platform plane and articulated with a free end (11c) thereof to said piston rod (5).

6. A truck according to Claim 5, characterized in that said free end (11c) of said rod member (11) rigid with said platform member (8) is removably articulated to said piston rod (5).

7. A truck according to Claim 5, characterized in that said cylinder (4) has discharge valve means operable by a pedal (12) located on said frame (1).

8. A truck according to Claims 1-7, characterized in that said frame (1) has at least one pair of upwardly converging wheels (2).

# Fig.1

# Fig.2

0021360

0021360

**Fig.3**

**Fig.4**